(19) Europäisches Patentamt European Patent Office Office européen des brevets

(11) **EP 3 475 379 B1**

(12) **FASCICULE DE BREVET EUROPEEN**

(45) Date de publication et mention de la délivrance du brevet:
**05.08.2020 Bulletin 2020/32**

(21) Numéro de dépôt: **17740435.7**

(22) Date de dépôt: **15.06.2017**

(51) Int Cl.:
*C09K 3/14* *(2006.01)*      *C01F 7/00* *(2006.01)*
*C04B 35/111* *(2006.01)*      *C04B 35/622* *(2006.01)*
*C04B 35/626* *(2006.01)*      *B24B 37/04* *(2012.01)*

(86) Numéro de dépôt international:
**PCT/FR2017/051545**

(87) Numéro de publication internationale:
**WO 2017/220888 (28.12.2017 Gazette 2017/52)**

(54) **PARTICULE ABRASIVE FRITTEE A BASE D'OXYDES PRESENTS DANS LA BAUXITE**

GESINTERTE SCHLEIFPARTIKEL MIT OXIDEN AUS BAUXIT

SINTERED ABRASIVE PARTICLE COMPRISING OXIDES PRESENT IN BAUXITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2016 FR 1655796**

(43) Date de publication de la demande:
**01.05.2019 Bulletin 2019/18**

(73) Titulaire: **IMERTECH SAS**
**75015 Paris (FR)**

(72) Inventeurs:
• **DUMONT, David**
**13120 Gardanne (FR)**
• **BERZATI, Ségolène**
**13710 Fuveau (FR)**

(74) Mandataire: **Haseltine Lake Kempner LLP**
**Bürkleinstrasse 10**
**80538 München (DE)**

(56) Documents cités:
EP-A1- 1 153 899      WO-A1-01/90030
WO-A1-2009/069770      US-A1- 2004 259 718

**Description**

L'invention concerne le domaine des particules abrasives frittées souvent dénommées « grains abrasifs », employées pour l'élaboration d'outils abrasifs.

L'invention concerne plus particulièrement des grains abrasifs frittés de composition synthétique à haute teneur en alumine additivée en oxydes présents naturellement dans la bauxite à savoir $Fe_2O_3$, $TiO_2$, $SiO_2$, MgO et CaO.

L'invention vise plus particulièrement le domaine des produits abrasifs agglomérés dans lesquels les grains abrasifs sont dispersés dans un agglomérant à base de résine, typiquement des meules. Les abrasifs appliqués sont typiquement des poudres abrasives déposées sur des supports (papier, toile, bande, etc.).

Même si elle s'applique à tous les types d'abrasifs, la présente invention est plus particulièrement destinée à la fabrication d'abrasifs agglomérés, tels que ceux utilisés pour la réalisation de meules destinées au décriquage des brames en acier, à l'ébavurage de pièces brutes de coulée ou encore à la rectification des métaux.

Les grains abrasifs doivent présenter de bonnes propriétés mécaniques, telles que la ténacité ou solidité et un bon pouvoir de coupe.

La solidité caractérise la propension du grain à se fracturer en générant des fragments apte à "régénérer ses arêtes" sous l'effet d'une sollicitation mécanique. Le produit testé est calibré en fonction du grade à tester. Après sollicitation mécanique (rotation en jarre chargée en billes d'acier), l'échantillon est tamisé suivant une colonne de plusieurs tamis dont les mailles ont été prédéfinies. De façon connue, un coefficient spécifique est affecté à chaque fraction récupérée, ce qui permet de classer la performance de la qualité en termes de solidité, exprimée comme une moyenne barycentrique des teneurs relatives à chaque fraction (exprimées en %). Plus la solidité est forte et plus la valeur obtenue doit être proche de 100.

La solidité se distingue de la dureté au regard des propriétés abrasives. Un grain très dur peut être fragile et sa rupture peut avoir un effet bénéfique (l'apparition de nouvelles arêtes vives par exemple) mais également des effets négatifs (baisse du pouvoir de coupe, mauvaise finition, etc.). Par contre, un grain moins dur peut être moins fragile et se révéler en fin de compte plus apte à "régénérer ses arêtes".

Le pouvoir de coupe est la propriété du grain de conserver les angles de coupe et aussi de se fracturer en donnant des angles de coupe nouveaux. Il peut être caractérisé par une performance à l'arrachement de matière, quantifiée par exemple à l'aide du rapport G = quantité de matière arrachée / quantité d'abrasif usé (ou en anglais « Q ratio »). Pour les applications des abrasifs agglomérés, certaines conditions d'utilisation, telles que le décriquage de brames en acier allié, peuvent requérir de la part du grain abrasif qu'il confère au produit aggloméré une performance de coupe de l'ordre de 200 à 2000 kg/h en subissant une très forte pression (jusqu'à 55 daN/cm$^2$ en conditions extrêmes) couplée à une température périphérique pouvant atteindre 1000°C.

Le pouvoir de coupe ou rapport G d'un produit abrasif est corrélé à un test dit de compression mesurant l'énergie requise pour casser les grains jusqu'à désintégration totale tel que décrit ci-après.

US 2004/259718 A1 décrit un procédé pour obtenir par frittage des granules abrasifs, composées -en poids- de: 50-80% Al2O3, 2-15% MgO, 1-15% SiO2, 0.5-5% CaO, et 0.5-2% Fe2O3 avec une taille moyenne inférieur à 500 $\mu$m et une densité supérieur à 1.1 g/cm3.

EP 1 153 899 A1 décrit des granules abrasives frittées avec des teneurs pondérales en oxydes telles que: 0.5-1% MgO + 0.5-1% SiO2 + 90-97.5% Al2O3. Les granules peuvent aussi contenir jusqu'à 0.1% CaO et 0.02% Fe2O3, avec une taille moyenne entre 180 - 200 $\mu$m.

Dans US 9 073 177, on décrit des grains abrasifs obtenus par frittage à partir de bauxite naturelle présentant des compositions variables d'environ 80-89% de $Al_2O_3$, 3-9% de $TiO_2$ et $Fe_2O_3$, 2.5-4% de $SiO_2$ et 0.1 à 1% de CaO et MgO et dont la microstructure cristalline est relativement fine avec des tailles moyennes de cristallites de 0.01 à 1.2 $\mu$m et un taux de porosité compris entre 0 et 15%. En fait ces particules obtenues à partir de bauxite naturelle provenant tant de la demanderesse (anciennement ALCAN) tel que cité dans US 9 073 177 (voir colonne 10 lignes 12-17) en tant qu'échantillon S1, S2 et CS2 ou de la société TREIBACHER pour l'échantillon CS1 (voir colonne 9 lignes 29-31) présentent l'inconvénient de présenter des variations de composition chimique qui nécessitent des adaptations permanentes au niveau du procédé de fabrication sauf à obtenir des performances non homogènes.

C'est pourquoi, on recherche une matière synthétique dont la composition chimique peut être contrôlée et ainsi s'assurer d'une stabilité de performance des grains abrasifs obtenus. Toutefois, en reconstituant des particules à partir de matière synthétique de même composition chimique que la bauxite naturelle ci-dessus, on obtient des microstructures plus grosses (à savoir de 1.5 à 2.5 $\mu$m) qu'avec de la bauxite naturelle (0,5 $\mu$m) mais qui ne donnent pas des performances au meulage suffisantes comme démontré ci-après.

Des compositions de grains abrasifs à base composition synthétique à haute teneur en alumine additivée en oxydes sont connus de l'homme de l'art.

Les grains abrasifs peuvent être, selon les cas, obtenus soit par broyage d'un produit dit "en roche" constitué d'un produit massif résultant de la solidification d'un produit liquide, par exemple à partir d'un produit abrasif électrofondu comme le corindon, soit par frittage d'une poudre, soit par le procédé dit "sol-gel" suivi en général d'un frittage.

De façon connue ces propriétés de solidité et pouvoir de coupe sont corrélées principalement à des valeurs de densité élevées notamment une densité d'au moins 3.5 g/cm$^3$ et à une taille des microstructures des cristallites spécifique selon le type de procédé mis en œuvre, et notamment de la température de frittage; en général une taille de cristallites la plus fine possible pour autant que la densité soit suffisante. En effet, les microstructures fines sont recherchées pour que les grains se cassent plus souvent et plus régulièrement par plus petits morceaux sous réserve que la microstructure ne soit pas trop fine et ne s'accompagne d'une densité insuffisante.

Le procédé dit « sol-gel » suivi d'un frittage conduit à des grains abrasifs contenant une microstructure cristalline avec des particules cristallines de tailles plus réduites, typiquement inférieures à 1 micron, plus généralement inférieures à 0.5 $\mu$m et présentant de bonnes propriétés de coupe. Toutefois, ce procédé est plus couteux et implique la mise en œuvre d'une alumine monohydrate plus fine typiquement de taille inférieure à 5 $\mu$m (« boehmite »).

Le procédé sol-gel suivi d'un frittage est mis en œuvre pour les compositions décrites notamment par exemple dans les brevets américains US 5 611 829, US 5 645 619 dans lesquels les grains réalisés sont constitués des seuls $Al_2O_3$, $Fe_2O_3$ et $SiO_2$ avec plus de 97% de $Al_2O_3$ et US 2013/0074418 dans lequel les grains sont constitués principalement de MgO et CaO et ne contiennent pas de $SiO_2$.

US 2004/004990 décrit des grains abrasifs obtenus par un procédé de fusion avec mise en œuvre de corindon (alumine fondue) et ayant subi en outre ici un traitement thermique final additionnel pour augmenter la ténacité car ce type d'abrasif obtenu par fusion vise des abrasifs de plus grande dureté mais de ténacité ou solidité plus faible. La présence d'oxydes CaO et $Fe_2O_3$ n'y est jamais envisagée.

Dans US 7 169 198 on décrit des grains abrasifs obtenus par simple frittage mais avec des compositions comprenant plus de 98% d'alumine d'une qualité très fine notamment avec un D50 de 0.5 $\mu$m.

Des particules abrasives sans oxyde de magnésium obtenues par frittage de poudre d'oxydes divers sont décrites dans US 8 894 730, US 8 882 871 et US 8 900 337. Dans ces brevets, on a cherché à améliorer la solidité/ténacité des grains abrasifs en précipitant une phase cristalline particulière de $FeTiAlO_5$ au niveau des joints de grains pour gêner la propagation des fissures dans la microstructure cristalline des grains. Mais, on voit sur la figure 2 de US 8 900 337 que la microstructure des grains présente des cristallites de taille en moyenne de l'ordre d'au moins 5 microns. La taille importante des cristallites ainsi que la phase de précipité de $FeTiAlO_5$ au niveau des joints de grains se traduisent en ce que le grain casse moins souvent ou moins facilement mais sous forme de plus gros morceaux.

WO01/90030 et US2004/259718 décrivent des matériaux isolants réfractaires notamment dans US2004/259718 en vue de la préparation de matériaux de constructions, de fibres de laine de roche ou de fibres céramiques, ou encore de composition à base de scories d'aluminate pour la production de fer et d'acier. Ces documents ne décrivent pas des particules abrasives, lesquelles requièrent des caractéristiques dimensionnelles, de densité, et de microstructures qui ne sont ni décrites, ni suggérées dans ces documents.

Le but de la présente invention était d'obtenir des grains abrasifs à partir d'une nouvelle composition synthétique par le procédé impliquant un simple frittage sans fusion ou autre traitement thermique additionnel final et/ou sans création de phase cristalline particulière non présente dans les grains obtenus à partir de bauxite naturelle et avec mise en œuvre d'alumine de qualité économique standard (avec un D50 typiquement compris entre 10 et 100 $\mu$m) et des oxydes présents dans la bauxite naturelle et qui présentent des propriétés de performance au meulage optimales notamment en termes de solidité et pouvoir de coupe.

Pour ce faire, la présente invention fournit des particules abrasives frittées dont la composition chimique en oxydes suivants comprend les fourchettes de teneurs pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 0.5 - 2.5 | 0 - 2 | 0.5 - 2.5 | 0.5 - 3 | 0.5 - 3 | 93 - 96.5 |

Selon l'invention, les particules abrasives frittées présentent une densité d'au moins 3.5 g/cm$^3$, plus particulièrement de 3.6 à 3.8 g/cm$^3$, et une microstructure dont la taille moyenne des microparticules cristallines est inférieure à 2 $\mu$m et plus particulièrement de 0.5 à 1.5 $\mu$m.

Plus particulièrement encore, des particules abrasives frittées selon l'invention comprennent les fourchettes de teneurs pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 0.5 - 2.5 | 0 - 2 | 0.5 - 1.5 | 0.5 - 2.5 | 0.5 - 2.5 | 93.5 96.5 |

Les particules présentant ces compositions chimiques ci-dessus obtenues par frittage à une température et présentant les caractéristiques de densité et microstructure ci-dessus présentaient les meilleures propriétés en termes de solidité, résistance à la compression et test de meulage (rapport G), notamment meilleures comparativement aux particules du commerce.

Selon un premier mode de réalisation des particules abrasives frittées selon l'invention pouvant être obtenues à des températures de frittage relativement basses de 1300 à 1500°C présentent une composition chimique comprenant les fourchettes de teneurs pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 0.5 - 1.5 | 0.5 - 2 | 0.5 - 1.5 | 0.5 - 1.5 | 1.5 - 2.5 | 93.5 - 94.5 |

De préférence, une particule abrasive frittée selon ce premier mode de réalisation, plus particulièrement adaptée au meulage d'acier inoxydable, présente une composition chimique comprenant les teneurs pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 1 | 1 | 1 | 1 | 2 | 94 |

Selon un second mode de réalisation des particules abrasives frittées selon l'invention pouvant être obtenues à des températures de frittage relativement élevées entre 1500 et 1700°C présentent une composition chimique comprenant les fourchettes de teneur pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 0.5 - 1.5 | 0-0.1 | 0.5 - 1.5 | 1.5 - 2.5 | 0.5 - 1.5 | 94.5 - 95.5 |

De préférence, une particule abrasive frittée selon ce second mode de réalisation, plus particulièrement adaptée au meulage d'acier inoxydable aussi bien que d'acier carbone, présente une composition chimique comprenant les teneurs pondérales suivantes pour un total de 100%:

| % $Fe_2O_3$ | % $TiO_2$ | % CaO | % MgO | % $SiO_2$ | %$Al_2O_3$ |
|---|---|---|---|---|---|
| 1 | 0 | 1 | 2 | 1 | 95 |

Plus particulièrement, les particules abrasives frittées selon l'invention présentent une dimension de 20 $\mu$m à 10 mm, de préférence sous forme allongée de bâtonnet de 0.2 à 3 mm de diamètre en section transversale et 0.5 à 10 mm de longueur.

La présente invention fournit également un procédé de fabrication de particules abrasives selon l'invention caractérisé en ce qu'on réalise les étapes successives suivantes :

    a) Mélange homogénéisé mécaniquement, typiquement par brassage de poudres comprenant:

        a1) une poudre d'alumine dont les particules ont un diamètre moyen (exprimé par le D50) de préférence entre 10 $\mu$m et 100 $\mu$m, ajoutée au mélange en proportion pondérale de 93 - 96.5%,

        a2) une poudre d'oxyde de fer $Fe_2O_3$ ajoutée au mélange en proportion pondérale de 0.5% à 2.5% et de préférence dont le D50 des particules est d'environ 20 $\mu$m,

        a3) une poudre d'oxyde de calcium CaO ajoutée au mélange en proportion pondérale de 0.5% à 2.5% et de préférence dont le D50 des particules est inférieur à 5 $\mu$m,

        a4) une poudre d'oxyde de magnésium MgO ajoutée au mélange en proportion pondérale de 0.5% à 3% et de préférence dont le D50 des particules est inférieur à 5 $\mu$m,

        a5) une poudre d'oxyde de silicium $SiO_2$ ajoutée au mélange en proportion pondérale de 0.5% à 3% et de préférence dont le D50 des particules est inférieur à 2 $\mu$m, et

a6) une poudre d'oxyde de titane TiO$_2$, ajoutée au mélange en proportion pondérale de 0% à 2% et de préférence dont le D50 des particules est inférieur à 5 µm.

b) Broyage du mélange de préférence pour obtenir des particules de D50 entre 0.5 et 1.5 µm,

c) Agglomération sous pression de la poudre ainsi obtenue, en vue d'obtenir des corps de pâte à cru,

d) Séchage des corps de pâte à cru et découpe ou cassage pour obtenir des particules de tailles voulues,

e) Frittage des dites particules par cuisson à une température de 1300°C à 1700°C, et

f) Tamisage des particules pour obtenir des particules de tailles voulues de préférence de 0.2 à 3 mm de diamètre en section transversale et 0.5 à 10 mm de longueur.

Plus particulièrement, l'agglomération sous pression de l'étape c) est un compactage par filage à cru, résultant en la création de fibres qui sont ensuite cassées de telle sorte que l'on puisse obtenir des corps de pâte à cru sous forme de section donnée et de longueur donnée.

Plus particulièrement encore, à l'étape c) on réalise les étapes de :

c1) malaxage des poudres du mélange en présence de solvant contenant des additifs de rhéologie pour former une pâte, de préférence de l'eau contenant un ou plusieurs agents rhéologiques pour charges minérales, et

c2) extrusion sous forme d'un fil continu d'une pâte contenant de préférence de 70 à 90% en poids de poudres de mélange minéral.

Les agents rhéologiques utilisés en tant que charges minérales en milieux aqueux peuvent être des dispersants, des lubrifiants et/ou des liants. Parmi ces agents, on peut citer plus particulièrement la méthylcellulose, l'alcool polyvinylique, le sulfonate de lignine, le polyacrylate, la glycérine, le glycérol, le stéarate d'ammonium, l'acide stéarique, le polyéthylène glycol, l'éthylène glycol, l'amidon, l'argile, le polycarbonate.

Plus particulièrement encore, à l'étape d), on réalise concomitamment le séchage du fil et sa mise à longueur sous forme de bâtonnets.

Plus particulièrement encore, à l'étape e), le cycle complet comprenant : montée en température, palier à la température de frittage puis refroidissement, est compris entre 30 et 120 minutes, typiquement 60 minutes de froid à froid.

Plus particulièrement encore, à l'étape e), on utilise un four rotatif fonctionnant en continu.

Dans un premier mode de réalisation, à l'étape e), la température de frittage est de 1300°C à 1500°C, notamment 1400°C, et on prépare des particules de composition chimique suivante à partir des fourchettes de teneurs pondérales suivantes de poudres des différents oxydes suivants pour un total de 100%:

| % Fe$_2$O$_3$ | % TiO$_2$ | % CaO | % MgO | % SiO$_2$ | % Al$_2$O$_3$ |
|---|---|---|---|---|---|
| 0.5 - 1.5 | 0.5 - 2 | 0.5 - 1.5 | 0.5 - 1.5 | 1.5 - 2.5 | 93.5 - 94.5 |

Dans un deuxième mode de réalisation, à l'étape e), la température de frittage est entre 1500°C et 1700°C, notamment 1600°C, et on prépare des particules de composition chimique suivante à partir des fourchettes de teneurs pondérales suivantes de poudres des différents oxydes suivants pour un total de 100%:

| % Fe$_2$O$_3$ | % TiO$_2$ | % CaO | % MgO | % SiO$_2$ | % Al$_2$O$_3$ |
|---|---|---|---|---|---|
| 0.5 - 1.5 | 0 - 0.1 | 0.5 - 1.5 | 1.5 - 2.5 | 0.5 - 1.5 | 94.5 - 95.5 |

La présente invention fournit également un produit abrasif notamment un produit dit appliqué, tel qu'un papier abrasif ou une toile abrasive, ou de préférence un produit aggloméré telle qu'une meule destinée notamment au décriquage de brames d'acier, caractérisé en ce qu'il comprend des particules abrasives selon l'invention.

Dans les compositions ci-dessus, pour CaO et MgO, on peut partir d'une poudre de carbonate respectivement CaCO$_3$ et MgCO$_3$ en adaptant les proportions pour obtenir les proportions voulues de CaO et MgO.

D'autres caractéristiques et avantages de la présente invention ressortiront mieux à la lecture de la description détaillée d'exemples de réalisation qui va suivre, faite de manière illustrative et non limitative, en référence aux dessins annexés sur lesquels :

- la figure 1 est un graphique montrant l'évolution du rapport G en fonction de l'énergie de compression E (mJ) nécessaire pour désintégrer le grain pour différentes compositions n° la à 4b ; G en abscisse et E en ordonnée étant des valeurs relatives $G_i=g_i/g_{1a}$ et $E_i= e_i/e_{1a}$ pour la composition n°i (i=1a à 4b) ;

- les figures 1A à 1E illustrent des tailles de cristaux de l'échelle arbitraire de 1 à 5 explicitée ci-après ;

- les figures 2A, 2B et 2C sont des graphiques illustrant l'évolution de la microstructure (« M ») en fonction de la densité (« D » en g/m³); et

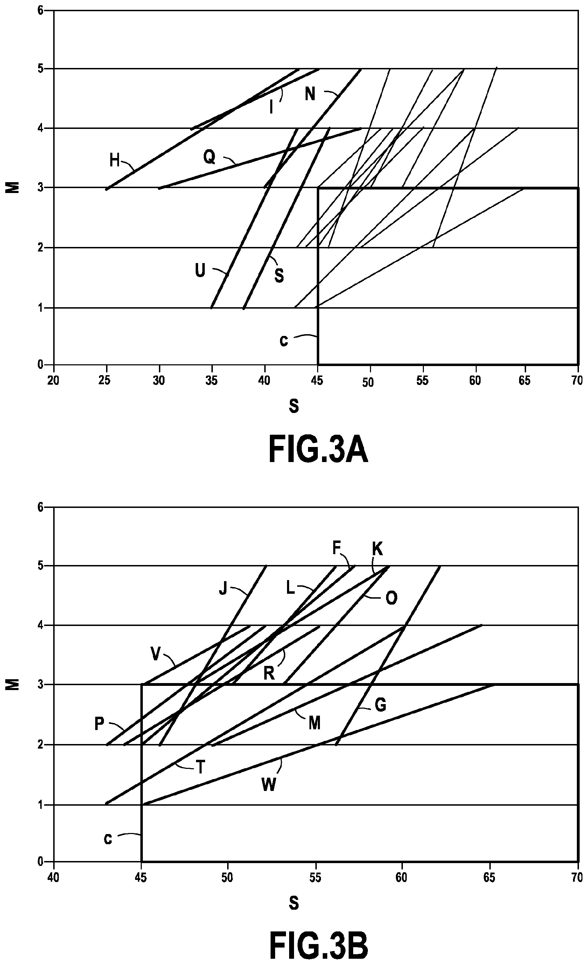

- les deux figures 3A et 3B sont des graphiques illustrant l'évolution de la microstructure en fonction de la solidité (« S »).

## A) PROCEDE DE FABRICATION DES PARTICULES OU GRAINS ABRASIFS

Le procédé de fabrication des grains abrasifs de type bauxite frittée synthétique testés ci-après comprend les étapes suivantes:

A.1) Réalisation d'un mélange comprenant une poudre d'alumine obtenue à partir de bauxite naturelle par le procédé dit procédé Bayer et des poudres des différents oxydes métalliques dont les proportions pour un total de 100% sont données au tableau I et dont les références commerciales, fournisseurs et valeurs de D50 sont explicitées dans le tableau II suivant. Pour CaO et MgO, on peut partir d'une poudre de carbonate respectivement $CaCO_3$ et $MgCO_3$ en adaptant les proportions pour obtenir les proportions voulues de CaO et MgO.

**Tableau I**

| % $Fe_2O_3$ | % $TiO_2$ | % CaO | % MgO | % $SiO_2$ | % $Al_2O_3$ |
|---|---|---|---|---|---|
| 0 - 7.5 | 0 - 7.5 | 0 - 2.5 | 0 - 2.5 | 0 - 3 | 80 - 98.5 |

**Tableau II**

| $Fe_2O_3$ | $TiO_2$ | CaO | MgO | $SiO_2$ | $Al_2O_3$ |
|---|---|---|---|---|---|
| Hématite | Rutile R320 | CaCO3 Mikhart 2 | MgCO3 CarboMag | Sipernat 320DS | AR12 |
| Arcelor Mital (FR) | Sachtleben Chemie GmbH (DE) | S.A. Provençal (FR) | Brenntag (FR) | Sobotram (FR) | Alteo Gardanne (FR) |
| 20 $\mu$m | 3 $\mu$m | 3 $\mu$m | 3 $\mu$m | 0.5 $\mu$m | 45 - 70 $\mu$m |

A.2) Le mélange de poudres est homogénéisé mécaniquement (broyeur à boulets acier) de manière à obtenir un mélange avec des particules de taille moyenne D50 comprise entre 0.5 et 1.5 $\mu$m et préférentiellement inférieure à 1 $\mu$m et un D90 inférieur à 15 $\mu$m et préférentiellement compris entre 6 et 10 $\mu$m.

D50 = diamètre pour lequel 50% des particules ont un diamètre inférieur à cette valeur.

D90 = diamètre pour lequel 90% des particules ont un diamètre inférieur à cette valeur.

A titre illustratif, les valeurs de D50 et D90 sont donnés dans le tableau III pour les deux exemples préférés selon la présente invention :

- Composition G : 1% CaO + 1% $TiO_2$ + 1% MgO + 1% $Fe_2O_3$ + 2% $SiO_2$ + 94% $Al_2O_3$.

- Composition W : 1% CaO + 0% $TiO_2$ + 2% MgO + 1% $Fe_2O_3$ + 1% $SiO_2$ + 95% $Al_2O_3$.

**Tableau III**

| Composition (n°) | D50 moyen ($\mu$m) | D90 moyen ($\mu$m) |
|---|---|---|
| G | 0.9 | 8.4 |
| W | 0.8 | 8.7 |

A.3) Réalisation d'une pâte qui est ensuite extrudée pour obtenir des corps crus.

La poudre obtenue à l'étape précédente (mélange d'alumine et d'autres oxydes présents naturellement dans la bauxite) est introduite dans un malaxeur ainsi qu'un solvant contenant des additifs rhéologiques à raison de 25 à 40% en poids par rapport au poids de poudre de mélange afin de former une pâte.

Le solvant préférentiellement utilisé est de l'eau. Plusieurs types d'additifs rhéologiques sont utilisés :

- agent dispersant pour charge minérale, le sulfonate de lignine ou d'autres composés tels que du polyéthylène glycol, de l'éthylène glycol, de l'huile de poisson, du polycarbonate, du polyacrylate;

- un agent liant pour charge minérale, la méthycellulose ou d'autres composés tels que de l'alcool polyvinylique, de l'argile, de l'amidon, de l'acrylate émulsifié ;

- un agent lubrifiant, la glycérine ou d'autres composés tels que du glycérol, de l'acide stéarique, du stéarate d'ammonium.

A.4) La pâte obtenue est ensuite compactée puis filée afin d'obtenir des corps crus. La pression au cours du filage est mesurée et contrôlée afin d'obtenir des corps crus de bonne qualité. Les pressions de filage dans l'extrudeuse sont comprises entre 50 et 150 bars et préférentiellement entre 80 et 120 bars afin d'obtenir une pâte contenant 70 à 90% en poids de poudres de mélange minéral.

Les corps crus sont de longs filaments de section circulaire de diamètres variant en fonction du grade désiré entre 0.5 et 4 mm.

A.5) Séchage et mise à longueur des corps de pâte à cru afin :

- d'obtenir des grains crus à la longueur souhaitée, et

- d'éliminer avant le frittage l'eau résiduelle qui pourrait causer des défauts au niveau des grains et affecter les propriétés abrasives après frittage.

A.6) Frittage des grains crus.

Les grains crus sont ensuite frittés dans un four rotatif fonctionnant en continu. La température de frittage est comprise entre 1300°C et 1700°C et préférentiellement entre 1400°C et 1600°C. Le cycle complet (montée en température - palier à la température de frittage - refroidissement) est compris entre 30 et 120 minutes, typiquement 60 minutes de froid à froid.

A.7) Tamisage des grains frittés pour obtenir les grains aux dimensions souhaitées.

L'échantillon est calibré aux dimensions voulues par sélection des grains dont la plus petite dimension (le diamètre) est comprise dans une fourchette donnée par tamisage entre deux tamis avec respectivement les deux limites de tailles de grains correspondant aux dimensions des ouvertures de mailles des deux tamis.

En pratique on sélectionne des grains de 0.2 à 3 mm de diamètre selon les applications envisagées.

Le grain abrasif obtenu est caractérisé par sa densité, sa solidité, sa microstructure et sa résistance à la compression selon les protocoles explicités ci-après.

B) PROTOCOLES DES MESURES DE CARACTERISATIONS DES GRAINS.

B.1) Solidité (exemple pour un grain de grade 12)

L'échantillon est calibré par sélection des grains compris entre 1.7 et 2 mm par tamisage entre deux tamis (1.7 et 2 mm d'ouverture de maille).

L'échantillon est broyé par sollicitation mécanique, typiquement une rotation en jarre remplie de billes d'acier. La colonne de tamis utilisée comprend les tamis suivants, définis par leur ouverture de maille : 1 mm ; 0.5 mm ; 0.25 mm et 0.125 mm.

On récupère les fractions de poudre relatives à chacune des classes dimensionnelles suivantes en fonction du diamètre du grain :

$c_1$ : D > 1 mm

$c_2$ : 1 mm > D > 0.5 mm

c3 : 0.5 mm > D > 0.25 mm

c4 : 0.25 mm > D > 0.125 mm

c5 : 0.125 mm > D

Si on exprime par Ti le poids relatif de la fraction de poudre récupérée dans la classe dimensionnelle i (c'est-à-dire le rapport (masse fraction i) / (masse initiale de l'échantillon avant le test)), la solidité est exprimée par la relation :

$$\text{Solidité} = 4 \times T1 + 2 \times T2 + 1 \times T3 + 0.5 \times T4 + 0.25 \times T5$$

De façon à ce que la poudre initiale corresponde à un indice 100, on divise la valeur précédente par la somme des coefficients de pondération. On peut constater avec cette formule que plus le passant du dernier tamis (D < 0.125 mm en l'occurrence) est important, plus la valeur obtenue est faible ; l'abrasif correspondant s'est beaucoup fragmenté, a généré un grand nombre de fines et par conséquent obtient une valeur de solidité plus faible.

B.2) Microstructure cristalline des grains.

Pour pouvoir observer la microstructure des grains avec un microscope électronique à balayage (MEB), une préparation céramographique des échantillons est nécessaire. La préparation des échantillons se fait en quatre étapes suivantes :

1) Fixation des échantillons sur un plot métallique en monocouche à l'aide d'une colle ;

2) Polissage à cœur des grains avec une polisseuse à plateau rotatif et des disques en carbure de silicium SiC, de granulométrie décroissante allant de 200 $\mu$m à 15 $\mu$m. Un nettoyage de la surface est réalisé entre chaque étape de polissage à l'eau puis à l'éthanol. Enfin, le polissage final est réalisé sur des feutres recouverts d'une pâte diamantée de granulométrie allant de 15 $\mu$m à 1 $\mu$m afin d'obtenir une surface d'aspect « miroir » ;

3) Suppression de la colle de fixation ;

4) Afin de pouvoir étudier la structure cristalline des grains, leur surface est révélée par traitement thermique à une température inférieure à la température de frittage.

La microstructure des grains ainsi préparés est observée à l'aide d'un microscope électronique à balayage MEB en mode électrons secondaires (Jeol JSM 5510) possédant un grossissement maximal de x30000. Les images sont ensuite analysées avec un logiciel de traitement d'image qui fournit le diamètre du cercle équivalent qui représente le diamètre d'un cercle qui aurait la même surface que le grain analysé.

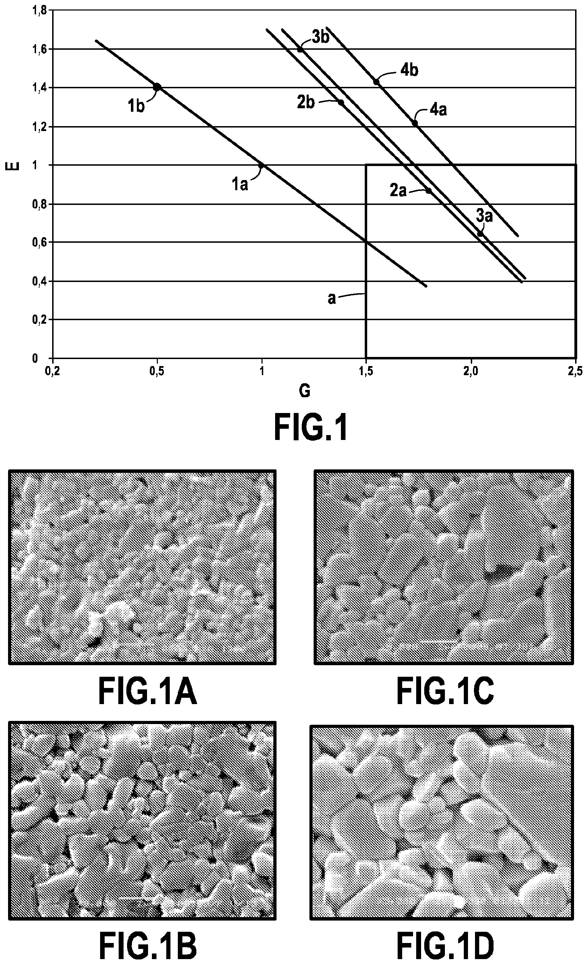

Les figures 1A à 1E illustrent des tailles de cristaux de l'échelle arbitraire de 1 à 5 explicitée ci-après :

Figure 1A, échelle 1 : environ 0.5 $\mu$m (de 0.3 à 0.6 $\mu$m)

Figure 1B, échelle 2 : environ 1.0 $\mu$m (entre 0.6 et 1.3 $\mu$m)

Figure 1C, échelle 3 : environ 1.5 $\mu$m (de 1.3 à 1.8 $\mu$m)

Figure 1D, échelle 4 : environ 2.0 $\mu$m (entre 1.8 et 2.5 $\mu$m)

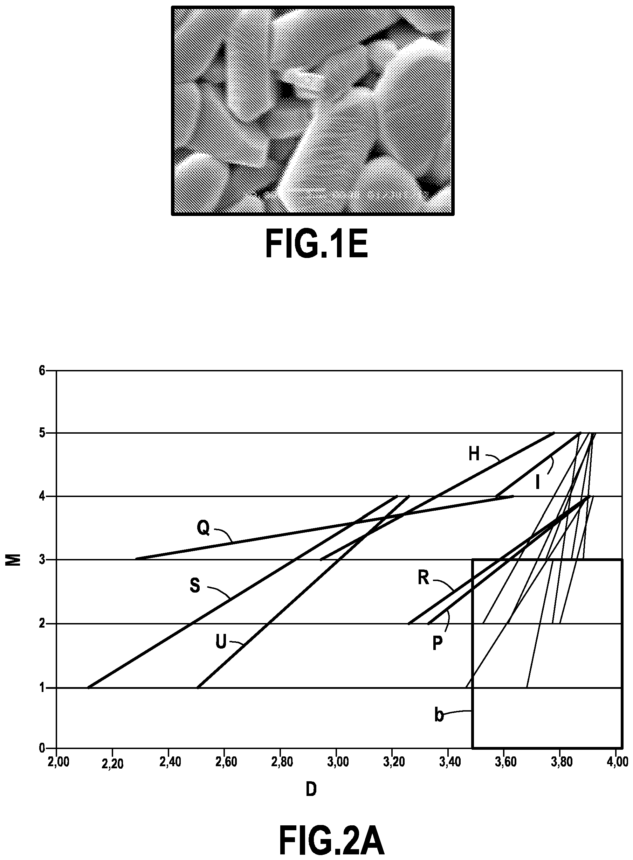

Figure 1E, échelle 5 : > 2.5 $\mu$m.

B.3) Densité

La densité pycnomètre est assimilable à la densité ossature des grains ; celle-ci permet d'évaluer la densité du squelette des grains. Elle ne tient compte que de la porosité dite «ouverte», une porosité accessible matérialisée par les fissures et les porosités de surface. Cette densité ne permet pas de mesurer la porosité dite «fermée», qui est matérialisée par les porosités non accessibles, inter ou intra granulaires.

La méthode de mesure de la densité pycnomètre consiste à introduire 25 g de grains dans une fiole préalablement pesée remplie d'eau, et à mesurer la différence de masse : Masse (eau + grains) - Masse (eau).

Cette masse ramenée au volume donne la densité pycnomètre du grain. La densité pycnomètre s'exprime en $g/cm^3$.

B.4) Résistance à la compression

Avec une presse mécanique Instrom équipée d'un module de compression, un essai de compression est réalisé sur un grain positionné verticalement entre le support inférieur et la traverse mobile. La traverse exerce progressivement une charge sur le grain avec une vitesse de descente de 0.03 mm/min. La charge et le déplacement de la traverse sont mesurés durant l'essai et permettent de calculer, à partir des dimensions du grain, la contrainte appliquée sur l'échantillon ainsi que sa déformation. L'essai de compression est réalisé sur 30 grains.

La courbe charge - déplacement commence toujours par une augmentation progressive de la charge (déformation élastique du matériau) jusqu'à ce que le grain commence à se casser. Ceci se traduit alors par une baisse de la charge. Si l'échantillon est complétement cassé, la charge décroit alors jusqu'à zéro. La charge maximale supportée par l'échantillon correspond alors à la contrainte maximale de résistance à la compression de l'échantillon.

Or, l'échantillon peut se casser que partiellement (il s'effrite) et conserver une intégrité suffisante et poursuivre le test. Dans ce cas, la première baisse de charge est ensuite suivie par une réaugmentation de celle-ci. Ce mécanisme d'effritement peut se répéter plusieurs fois jusqu'à la désintégration totale du grain qui se traduit par une charge nulle. L'aire sous la courbe charge - déplacement permet de calculer l'énergie nécessaire pour casser intégralement le grain.

Ce phénomène d'effritement est représentatif de ce que subit le grain dans une meule. L'énergie de résistance à la compression est un bon indicateur de la performance du grain dans un article abrasif.

B.5) Rapport G

Des meules à résine organique sont fabriquées pour les échantillons de compositions testées. Avant le test de meulage, la meule est pesée ainsi qu'une brame d'acier inoxydable. Un essai de meulage est réalisé pendant une durée prédéfinie et fixe. Après le test, la meule et la brame d'acier sont à nouveau pesées. Le rapport G correspond au rapport entre la masse d'acier arraché et l'usure de la meule. Plus la quantité d'acier arrachée est élevée et l'usure de la meule restreinte, plus le rapport G est élevé.

C) EXEMPLES DE COMPOSITIONS CHIMIQUES TESTEES.

C.1) Comparaison bauxite naturelle et bauxite synthétique

La composition chimique de la bauxite naturelle utilisée pour fabriquer des grains frittée de bauxite est typiquement : 1% CaO, 4% $TiO_2$, 0.2% MgO, 3.5% $Fe_2O_3$, 3% $SiO_2$ et 88.3% $Al_2O_3$. Cette composition chimique a été reproduite de manière synthétique. Des grains avec ces deux matières premières (bauxite naturelle et bauxite synthétique) ont été réalisés et frittés à 3 températures de frittage : 1300, 1400 et 1500°C.

Les caractéristiques des grains sont présentées dans le tableau A ci-dessous dans lequel les microstructures sont qualifiées selon l'échelle arbitraire de 1 à 5 ci-dessus explicitée.

**Tableau A**

| Température de frittage | Caractéristiques grains | Matière première | |
|---|---|---|---|
| | | Bauxite naturelle | Bauxite synthétique |
| 1300°C | Densité (g/cm$^3$) | 3.71 | 3.74 |
| | Microstructure | 1 | 3 |
| | Solidité | 62 | 49 |
| 1400°C | Densité (g/cm$^3$) | 3.64 | 3.85 |
| | Microstructure | 3 | 4 |
| | Solidité | 84 | 59 |

(suite)

| Température de frittage | Caractéristiques grains | Matière première | |
|---|---|---|---|
| | | Bauxite naturelle | Bauxite synthétique |
| 1500°C | Densité (g/cm$^3$) | Pas réalisé | 3.86 |
| | Microstructure | | 5 |
| | Solidité | | 60 |

C.2) Lien compression - rapport G (ou « Qratio »)

Le graphique de la figure 1 représente pour différentes compositions chimiques de grains abrasifs frittés l'évolution du rapport G en fonction de l'énergie nécessaire pour désintégrer intégralement ce type de grains abrasifs à partir d'un essai de compression (pour rappel l'énergie indiquée sur la graphique correspond à une moyenne sur 30 grains). Les valeurs d'énergie sont exprimées en relatif par rapport à l'échantillon de composition n°1a qui sert de référence.
Des meules à résine organique ont été fabriquées pour les 8 échantillons détaillées dans le tableau B.1 ci-après.

**Tableau B.1**

| N° composition | % CaO | % TiO$_2$ | % MgO | % Fe$_2$O$_3$ | % SiO$_2$ | % Al$_2$O$_3$ | Temp. frittage |
|---|---|---|---|---|---|---|---|
| 1a | 1 | 4 | 0.2 | 3.5 | 3 | 88.3 | T1 |
| 1b | 1 | 4 | 0.2 | 3.5 | 3 | 88.3 | T2 |
| 2a | 0.5 | 0.5 | 0.2 | 0 | 0.4 | 98.4 | T'1 |
| 2b | 0.5 | 0.5 | 0.2 | 0 | 2.0 | 98.4 | T'2 |
| 3a | 1 | 1 | 1 | 1 | 2 | 94 | T1' |
| 3b | 1 | 1 | 1 | 1 | 2 | 94 | T2' |
| 4a | 1 | 0 | 2 | 1 | 1 | 95 | TI" |
| 4b | 1 | 0 | 2 | 1 | 1 | 95 | T2" |

Pour les différentes compositions chimiques testées, le fait de minimiser l'énergie mesurée en compression permet d'augmenter significativement le rapport G.
Le tableau B.2 ci-dessous indique pour chaque type de grains abrasifs la matière première utilisée pour fabriquer le grain abrasif ainsi que les caractéristiques du grain : densité, microstructure (« micro » en abrégé) et solidité.

**Tableau B.2**

| N° composition | Matière première | Micro | Densité (g/cm$^3$) | Solidité |
|---|---|---|---|---|
| 1a | Bauxite naturelle | 1 | 3.65 | 71 |
| 1b | Bauxite synthétique de même composition que la bauxite naturelle | 4 | 3.72 | 55 |
| 2a | composition synthétique (Al$_2$O$_3$ = 98%) | 3 | 3.70 | 50 |
| 2b | | 3 | 3.62 | 57 |
| 3a | composition synthétique (Al$_2$O$_3$ = 94%) | 1 | 3.71 | 53 |
| 3b | | 4 | 3.78 | 70 |
| 4a | composition synthétique (Al$_2$O$_3$ = 95%) | 3 | 3.68 | 69 |
| 4b | | 2 | 3.71 | 53 |

L'échantillon de composition n°1a correspond à des grains abrasifs fabriqués à partir de bauxite naturelle. La composition chimique typique de cette bauxite est 1% CaO, 4% TiO$_2$, 0.2% MgO, 3.5% Fe$_2$O$_3$, 3% SiO$_2$ et 88.3% Al$_2$O$_3$. Cette composition chimique a été reproduite de manière synthétique et correspond à l'échantillon de composition n°1b.

Le fait de reproduire synthétiquement la composition chimique de la bauxite naturelle ne permet pas d'obtenir le même rapport G ni la même énergie. Ceci ne semble pas surprenant puisque ces deux types de grains ne possèdent pas les mêmes caractéristiques : densité, microstructure et solidité.

Pour mieux comprendre cette différence sur les caractéristiques des grains en fonction de la matière première utilisée, des grains avec ces deux matières premières (bauxite naturelle et synthétique avec la même composition chimique) ont été réalisés et frittés à 3 températures de frittage : 1300, 1400 et 1500°C. Les caractéristiques des grains sont présentées dans le tableau A ci-dessus. Avec la bauxite naturelle, le compromis densité - microstructure - solidité de l'échantillon de composition n°1a est atteint pour une température de frittage d'environ 1300°C. A 1400°C, la solidité a fortement augmenté mais la microstructure commence à être trop grosse. La comparaison des caractéristiques des grains réalisés avec les deux matières premières montre qu'une bauxite synthétique reproduisant la composition chimique de la bauxite naturelle ne permet pas dans la gamme de température étudiée d'atteindre le même compromis densité - microstructure - solidité. En effet, la composition synthétique entraine des microstructures beaucoup plus grosses avec des solidités bien inférieures.

Pour essayer d'obtenir à partir d'une matière première synthétique des caractéristiques de grains abrasifs se rapprochant de ceux fabriqués avec de la bauxite naturelle et surtout permettant de diminuer l'énergie de compression, des grains avec 3 compositions chimiques différentes (alumine additivée avec les différents oxydes présents naturellement dans la bauxite) mais avec des teneurs en alumine plus élevées (entre 94 et 98%) ont été fabriqués. Ces grains ont été frittés à deux températures différentes entre 1400°C et 1600°C à chaque fois (T1/T2, T1'/T2' etc..) qui correspondent aux échantillons 2a-2b, 3a-3b et 4a-4b sur le graphique de la figure 1 et les tableaux B.1 et B.2.

Pour la première composition synthétique (échantillons de compositions n°2a et 2b), la microstructure est plus fine que l'échantillon de composition n°1b mais la solidité est du même ordre de grandeur. L'échantillon avec cette composition chimique ayant l'énergie la plus faible (échantillon de composition n°2a) permet d'obtenir un rapport G 3 fois plus élevé que l'échantillon synthétique reproduisant la composition de la bauxite naturelle (échantillon de composition n°1b) et 1,7 fois plus élevé que l'échantillon réalisé avec de la bauxite naturelle (échantillon de composition n°1a). Comme c'est déjà le cas pour les grains fabriqués avec de la bauxite naturelle, le fait de diminuer la microstructure influence directement la performance du grain en application de manière positive.

Pour l'échantillon de la deuxième composition chimique avec le minimum d'énergie de compression (échantillon de composition n°3a), la microstructure est bien plus fine que l'échantillon de composition n°1b (et équivalente à l'échantillon de composition n°1a) mais avec le même niveau de solidité que l'échantillon de composition n°1b. Cet échantillon permet d'obtenir un rapport G 3.5 fois plus élevé que l'échantillon de composition n° 1b et 2 fois plus élevé que l'échantillon de composition n°1a. Ces résultats confirment que l'influence de la microstructure sur le rapport G et l'énergie de compression est donc de premier ordre.

Pour l'échantillon de composition n°4a avec le minimum d'énergie de compression, la microstructure est moins fine que l'échantillon de composition n°3a mais plus fine que l'échantillon de composition n°1b. Par contre le niveau de solidité est plus élevé que ces deux échantillons et comparable à l'échantillon de composition n°1a. Cet échantillon de composition n°4a permet d'obtenir un rapport G 3 fois plus élevé que l'échantillon de composition n°1b et 1,7 fois plus élevé que l'échantillon de composition n°1a. On obtient avec cet échantillon de composition n°4a le même niveau de performance qu'avec l'échantillon de composition n°2a alors que l'énergie de compression est plus élevée. Ceci fait escompter le gain potentiel de cette composition n°4a si on arrive à réduire encore l'énergie de compression en réduisant notamment la taille de la microstructure.

Ces exemples mettent en évidence le lien direct entre les énergies de compression et le rapport G. En fonction des compositions chimiques, la corrélation entre l'énergie de compression et le rapport G possède quasiment la même pente mais a tendance à se décaler vers la droite pour les compositions chimiques synthétiques avec des teneurs élevées en alumine (figure 1). Il ressort de manière claire que la minimisation de l'énergie de compression entraine une augmentation du rapport G. Les caractéristiques des grains impactent directement l'énergie de compression.

L'objectif de cette invention est donc de déterminer la ou les compositions chimiques (et températures de frittage) permettant d'obtenir une énergie de compression la plus faible possible. Pour cela, on cherche à optimiser le compromis densité - microstructure - solidité. Le cadre a du graphique de la figure 1 illustre la zone d'intérêt (minimums d'énergie correspondant aux meilleurs rapports G). L'analyse des caractéristiques des grains dans ce cadre (échantillons de composition n°2a et 3a) permet de sélectionner les cibles à viser sur la densité, la microstructure et la solidité :

Critère 1 : Microstructure la plus fine possible et n'excédant pas une taille de 3 selon l'échelle arbitraire et de préférence comprise entre 1 et 2.

Critère 2 : Densité suffisante c'est-à-dire supérieure à 3.5 g/cm$^3$ et de préférence entre 3.7 et 3.8 g/cm$^3$.

Critère 3 : Solidité suffisante c'est-à-dire supérieure à 45 et de préférence supérieure à 55.

Ces critères sont corrélés entre eux. En effet, un grain fritté à haute température va généralement avoir une densité et une solidité élevées mais en contrepartie une microstructure également très grosse. A l'inverse, un grain fritté à faible température va avoir une microstructure fine mais peut également ne pas avoir une tenue mécanique suffisante c'est-à-dire une densité et/ou une solidité trop faible. L'objectif est donc de trouver la ou les compositions chimiques couplées à une température de frittage permettant d'atteindre le meilleur compromis sur l'ensemble de ces caractéristiques.

Pour ce faire, on a travaillé dans un premier temps sur le compromis densité - microstructure afin de dégager les plages de concentration préférentielles de chaque oxyde. Les compositions chimiques permettant d'obtenir une densité suffisante et une microstructure fine ont ensuite été caractérisées en solidité pour affiner le choix de(s) compositions chimiques de bauxite synthétique permettant d'obtenir des grains abrasifs les plus performants en application.

On recherche donc un grain avec une solidité la plus élevée possible au moins égal à celui de la bauxite naturelle, afin d'obtenir un bon pouvoir de coupe en application.

C.3) Compromis densité - microstructure

On a testé un grand nombre de compositions dans les fourchettes de compositions du tableau I ci-dessus.

A titre illustratif les compositions du tableau C.1 suivant ont été testées entre autres.

**Tableau C.1**

| % CaO | % TiO$_2$ | % MgO | % Fe$_2$O$_3$ | % SiO$_2$ | % Al$_2$O$_3$ |
|---|---|---|---|---|---|
| 0 | 7,5 | 0 | 7,5 | 0 | 85 |
| 1,25 | 3,75 | 1,25 | 3,75 | 0 | 90 |
| 2,5 | 7,5 | 0 | 0 | 0 | 90 |
| 2,5 | 7,5 | 2,5 | 7,5 | 0 | 80 |
| 0 | 0 | 0 | 7,5 | 0 | 92,5 |
| 1,25 | 0 | 0 | 7,5 | 0 | 91,25 |
| 2,5 | 7,5 | 0 | 7,5 | 0 | 82,5 |
| 0 | 7,5 | 2,5 | 0 | 0 | 90 |
| 2,5 | 0 | 0 | 0 | 0 | 97,5 |
| 1,25 | 0 | 2,5 | 7,5 | 0 | 88,75 |
| 2,5 | 0 | 2,5 | 7,5 | 0 | 87,5 |
| 1,25 | 7,5 | 0 | 7,5 | 0 | 83,75 |
| 0 | 7,5 | 2,5 | 7,5 | 0 | 82,5 |
| 1,25 | 7,5 | 2,5 | 0 | 0 | 88,75 |
| 1,25 | 0 | 2,5 | 0 | 0 | 96,25 |
| 0 | 0 | 0 | 0 | 0 | 100 |
| 2,5 | 0 | 0 | 7,5 | 0 | 90 |
| 0 | 7,5 | 0 | 0 | 0 | 92,5 |
| 1,25 | 7,5 | 2,5 | 7,5 | 0 | 81,25 |
| 0 | 0 | 2,5 | 7,5 | 0 | 90 |
| 0 | 0 | 2,5 | 0 | 0 | 97,5 |
| 2,5 | 0 | 2,5 | 0 | 0 | 95 |
| 2,5 | 7,5 | 2,5 | 0 | 0 | 87,5 |
| 1,25 | 0 | 0 | 0 | 0 | 98,75 |
| 1,25 | 7,5 | 0 | 0 | 0 | 91,25 |
| 0 | 1 | 0,5 | 0 | 0 | 98,5 |

(suite)

| % CaO | % TiO$_2$ | % MgO | % Fe$_2$O$_3$ | % SiO$_2$ | % Al$_2$O$_3$ |
|---|---|---|---|---|---|
| 0 | 2 | 1 | 0 | 0 | 97 |
| 0 | 0 | 0,5 | 1 | 0 | 98,5 |
| 0 | 0 | 1 | 2 | 0 | 97 |
| 0 | 1 | 0,5 | 0 | 2 | 96,5 |
| 0 | 2 | 1 | 0 | 2 | 95 |
| 0 | 2 | 2 | 0 | 2 | 94 |
| 1 | 1 | 1 | 1 | 1 | 95 |
| 1 | 1 | 1 | 1 | 2 | 94 |
| 0 | 2 | 2 | 2 | 0 | 94 |
| 2 | 2 | 0 | 2 | 0 | 94 |
| 1 | 1 | 1 | 2 | 1 | 94 |
| 2 | 0 | 2 | 0 | 2 | 94 |
| 0 | 2 | 0 | 2 | 2 | 94 |
| 0 | 2 | 2 | 0 | 2 | 94 |
| 0 | 0 | 0 | 2 | 0 | 98 |
| 1 | 1 | 0 | 1 | 1 | 96 |
| 1 | 2 | 1 | 1 | 1 | 94 |
| 0 | 1 | 1 | 1 | 1 | 96 |
| 2 | 2 | 2 | 2 | 2 | 90 |
| 2 | 0 | 0 | 2 | 2 | 94 |
| 2 | 0 | 0 | 0 | 0 | 98 |
| 1 | 1 | 2 | 1 | 1 | 94 |
| 0 | 2 | 0 | 0 | 0 | 98 |
| 1 | 1 | 1 | 1 | 0 | 96 |
| 0 | 0 | 0 | 0 | 2 | 98 |
| 1 | 1 | 1 | 0 | 1 | 96 |
| 2 | 2 | 2 | 0 | 0 | 94 |
| 1 | 0 | 1 | 1 | 1 | 96 |
| 0 | 0 | 2 | 0 | 0 | 98 |
| 2 | 0 | 2 | 2 | 0 | 94 |
| 0 | 0 | 2 | 2 | 2 | 94 |
| 2 | 1 | 1 | 1 | 1 | 94 |
| 2 | 2 | 0 | 0 | 2 | 94 |
| 0 | 1 | 2 | 0 | 2 | 95 |
| 0 | 0 | 2 | 1 | 2 | 95 |

Comme explicité ci-après, les meilleurs résultats étaient fournis pour différentes compositions chimiques de bauxite synthétique pour lesquelles chaque oxyde (Fe$_2$O$_3$, SiO$_2$, TiO$_2$, CaO et MgO) varie comme indiqué dans le tableau C.2 ci-après et avec les données de densité et de microstructure correspondant à des frittages réalisés à 1400et 1600°C du tableau C.4 pour des compositions préférées.

**Tableau C.2**

| Oxyde | SiO$_2$ | Fe2O$_3$ | TiO$_2$ | MgO | CaO | Al$_2$O$_3$ |
|---|---|---|---|---|---|---|
| (%) | 0.5 - 2.5 | 0.5 - 2.5 | 0 - 2 | 0.5 - 2.5 | 0.5 - 1.5 | 93.5 - 96,5 |

Une composition de référence (« Composition Ref ») avec 100% Al$_2$O$_3$, c'est à dire une composition chimique avec uniquement de l'alumine (exempt de SiO$_2$, TiO$_2$, Fe$_2$O$_3$, MgO et CaO) a été testée laquelle ne permet pas d'obtenir un grain avec le compromis densité - microstructure souhaitée. En effet, la densité n'est pas suffisante avec un frittage à 1400°C et à 1600°C la microstructure est trop grossière (tableau C.3). Il est donc nécessaire d'ajouter d'autres oxydes à l'alumine pour pouvoir répondre à l'objectif.

On a ajouté séparément les différents oxydes. Ainsi, à titre illustratif, pour les compositions A, B, C, D et E du tableau C.3 ci-après : tous les oxydes sont égaux à 0% sauf 1 oxyde à 2% (Al2O$_3$ constant à 98%). A 1400°C, aucune de ces compositions chimiques ne permet d'atteindre une densité suffisante à part la composition E avec 2% de TiO$_2$ mais elle possède une microstructure trop élevée. A 1600°C, la microstructure est trop élevée pour toutes ces compositions. Si on compare ces compositions avec la composition Ref à 1400°C, on remarque que :

- l'ajout de TiO$_2$ permet d'augmenter significativement la densité (+0.7 g/cm$^3$) mais la microstructure augmente également fortement (on passe de 2 à 4 sur l'échelle arbitraire : +2) ;

- l'ajout de SiO$_2$ augmente la densité (+0.2 g/cm$^3$) et diminue la microstructure (-1) ;

- l'ajout de MgO et CaO diminue légèrement la densité (-0.1 g/cm$^3$) et augmente légèrement la microstructure (+1) ;

- l'ajout de Fe$_2$O$_3$ augmente légèrement la densité (+0.1 g/cm$^3$) et également la microstructure (+1).

Avec la composition F : tous les oxydes sont égaux à 1% (Al$_2$O$_3$ 95%). La combinaison, à hauteur de 1%, de tous les oxydes présents naturellement dans la bauxite, permet à 1400°C d'obtenir le compromis densité - microstructure recherché. Il est donc intéressant de combiner plusieurs oxydes et de faire varier simultanément leur concentration dans le mélange pour voir l'impact de chacun sur les propriétés des grains afin de dégager les plages de concentration optimales de chaque oxyde pour répondre à l'objectif recherché.

**Tableau C.3**

| N° composition | % CaO | % TiO$_2$ | % MgO | % Fe$_2$0$_3$ | % SiO$_2$ | % Al$_2$O$_3$ | 1400°C | | 1600°C | |
|---|---|---|---|---|---|---|---|---|---|---|
| | | | | | | | Densité (g/cm$^3$) | Micro | Densité (g/cm$^3$) | Micro |
| Réf | 0 | 0 | 0 | 0 | 0 | 100 | 2.78 | 2 | 3.64 | 4 |
| A | 0 | 0 | 0 | 2 | 0 | 98 | 2.82 | 3 | 3.87 | 4 |
| B | 2 | 0 | 0 | 0 | 0 | 98 | 2.69 | 3 | 3.31 | 4 |
| C | 0 | 0 | 2 | 0 | 0 | 98 | 2.70 | 3 | 3.72 | 4 |
| D | 0 | 0 | 0 | 0 | 2 | 98 | 2.98 | 1 | 3.91 | 4 |
| E | 0 | 2 | 0 | 0 | 0 | 98 | 3.47 | 4 | 3.84 | 5 |
| F | 1 | 1 | 1 | 1 | 1 | 95 | 3.53 | 2 | 3.91 | 5 |

Le tableau C.4 ci-dessous illustre différentes compositions chimiques de bauxite synthétique pour lesquelles chaque oxyde (Fe$_2$O$_3$, SiO$_2$, TiO$_2$, CaO et MgO) varie entre 0 et 2% avec les données de densité et de microstructure correspondant à deux frittages réalisés à 1400 et 1600°C.

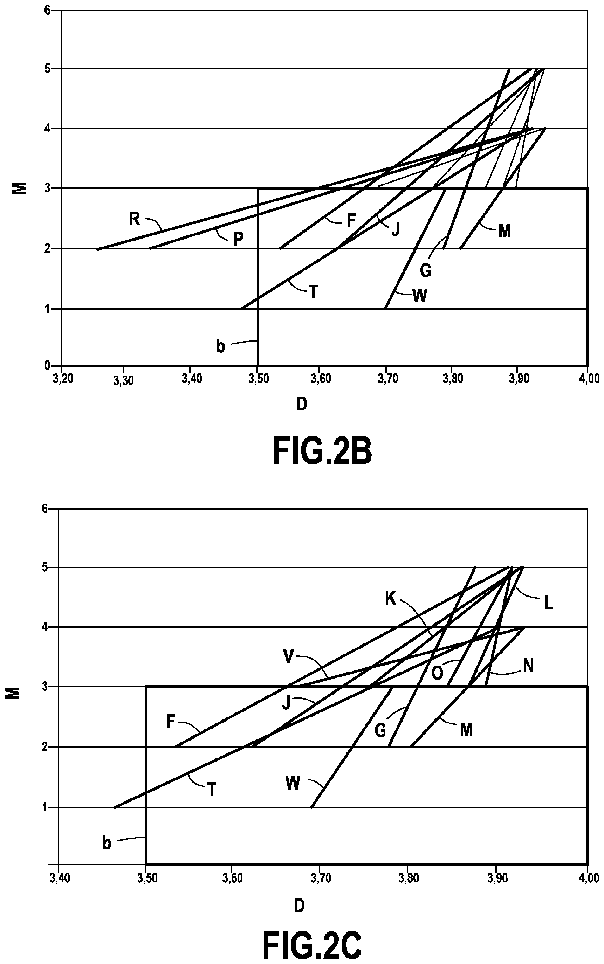

Les trois graphiques des figures 2A, 2B et 2C illustrent pour chacune des 18 compositions chimiques l'évolution de la microstructure en fonction de la densité (correspondant à deux frittages réalisés à 1400°C et 1600°C). Le cadre b représente la cible à viser à savoir une densité > 3.5 g/cm$^3$ et une microstructure n'excédant pas 3 selon l'échelle arbitraire.

5 compositions chimiques : H, I, Q, S et U ont un compromis densité - microstructure qui ne se situe pas dans le cadre b figure 2A. Ces compositions chimiques sont exclues car elles ne pourront pas permettre d'obtenir la densité et la microstructure visées quelle que soit la température de frittage. Leur point commun est l'absence de $SiO_2$. De ce fait, le critère de premier ordre est la présence de $SiO_2$ dans la composition de bauxite synthétique recherchée.

L'évolution de la microstructure en fonction de la densité des compositions chimiques P et R passe dans la cadre b uniquement pour une gamme de température très restreinte comme montré figure 2B. Ces compositions chimiques P et R sont peu favorables puisqu'elles nécessitent un contrôle très précis de la température de frittage dans une petite zone de température. Ces compositions P et R ne possèdent pas de $Fe_2O_3$. Il semblerait donc que l'absence de $Fe_2O_3$, comme l'absence de $SiO_2$, soit néfaste à l'obtention du compromis densité - microstructure recherché. De plus, si on regarde les compositions restantes F, G, J, K, L, M, N, O, T, V et W, qui répondent à l'objectif, elles possèdent toutes entre 1 et 2% de $Fe_2O_3$.

A ce stade, les deux critères de composition chimique qui ressortent sont la présence de $SiO_2$ et $Fe_2O_3$. Toutes les compositions chimiques avec 1 à 2% de chacun de ces deux oxydes permettent d'obtenir un grain avec une densité suffisante et une microstructure fine. La plage de variation de ces deux oxydes ($SiO_2$ et $Fe_2O_3$) est donc fixée entre 0.5 et 2.5%.

En ce qui concerne les 3 autres oxydes, on note qu'une variation entre 0 et 2% de chacun d'entre eux permet d'obtenir un bon compromis densité - microstructure. Cependant, certaines zones préférentielles peuvent être mises en évidence en examinant plus en détails les compositions chimiques F, G, J, K, L, M, N, O, T, V et W.

La figure 2C montre les compositions chimiques permettant d'obtenir la microstructure la plus fine. Sur la figure 2C, 6 compositions chimiques permettent d'obtenir une microstructure fine de 1 ou 2 selon l'échelle arbitraire : F, G, J, M, T et W. Ces compositions possèdent toutes 1% de CaO et 1% de MgO (à part la composition W : 2% MgO). L'association de ces deux oxydes, connus pour impacter fortement la croissance granulaire, avec une quantité maitrisée de $Fe_2O_3$ (1%), $SiO_2$ (1 à 2%) et $TiO_2$ (0 à 2%) permet d'obtenir des grains avec une densité suffisante (> 3.5 g/cm$^3$) et une microstructure fine (comparable à celle obtenue avec de la bauxite naturelle). Les autres compositions : K, L, N, O et V, qui possèdent des microstructures de 3 possèdent soit CaO, soit MgO mais pas les deux en même temps.

Seules les compositions T et W possèdent à 1400°C une microstructure de taille 1. Leurs compositions chimiques possèdent plusieurs points communs qui sont : 0% $TiO_2$, 1% CaO, 1% $Fe_2O_3$, 1% $SiO_2$. La composition W qui possède une densité plus élevée que la composition T possède 2% de MgO contre 1% pour la composition T.

Les deux compositions chimiques G et M permettent d'obtenir une densité élevée (et une microstructure < 3). Ces deux compositions chimiques G et M possèdent à 1400°C une microstructure de 2 avec une densité de 3,8 g/cm$^3$. Ces deux compositions G et M possèdent 1% de $Fe_2O_3$, 1% de MgO, 1% de CaO. La seule différence est que la composition G possède 2% de $SiO_2$ et la composition M 2% de $TiO_2$. Pour ce type de composition (1% de $Fe_2O_3$, CaO et MgO), l'ajout de 2% de $TiO_2$ au lieu de 2% de $SiO_2$ ne modifie pas la densité ni la microstructure.

Seule la composition chimique W est dans le cadre b entre 1400 et 1600°C. Elle possède 0% de $TiO_2$, 1% de CaO, 1% de $Fe_2O_3$, 1% de $SiO_2$ et 2% de MgO.

Les teneurs préférentielles de $TiO_2$, CaO et MgO sont donc les suivantes:

- 0 à 1% de $TiO_2$. Cet oxyde permet d'augmenter significativement la densité comme pour la composition E du tableau A mais augmente également fortement la microstructure. Pour limiter cela, l'ajout de $TiO_2$ sera au maximum de 1.5%. On utilisera plutôt $SiO_2$ pour augmenter davantage la densité car cet oxyde ne modifie quasiment pas la microstructure voire la diminue (cf. composition D). De plus, si on recherche une composition chimique qui permettent d'obtenir un compromis densité - microstructure dans la cible recherchée pour une large gamme de température allant jusqu'à 1600°C (cf. composition W), il est préférable de ne pas ajouter plus de $TiO_2$.

- 1% CaO soit en pratique 0.5 à 1.5% de CaO, et 1 à 2% MgO soit en pratique 0.5 à 2.5% de MgO. Les compositions chimiques permettant d'obtenir les microstructures les plus fines (avec une densité > 3.5 g/cm$^3$) possèdent toutes 1% de CaO. Pour que l'effet de cet oxyde soit optimal, il faut le combiner à MgO entre 1 et 2%.

Tous les exemples dans le tableau C.4 possèdent une teneur en $Al_2O_3$ comprise entre 94 et 96. La plage de variation en pratique peut être donc fixée entre 93.5 et 96.5%.

**Tableau C.4**

| N° composition | % CaO | % TiO$_2$ | % MgO | % Fe$_2$0$_3$ | % SiO$_2$ | % Al$_2$O$_3$ | 1400°C | | 1600°C | |
|---|---|---|---|---|---|---|---|---|---|---|
| | | | | | | | Densité (g/cm³) | Micro | Densité (g/cm³) | Micro |
| F | 1 | 1 | 1 | 1 | 1 | 95 | 3.53 | 2 | 3.91 | 5 |
| G | 1 | 1 | 1 | 1 | 2 | 94 | 3.78 | 2 | 3.88 | 5 |

(suite)

| N° composition | % CaO | % TiO$_2$ | % MgO | % Fe$_2$O$_3$ | % SiO$_2$ | % Al$_2$O$_3$ | 1400°C | | 1600°C | |
|---|---|---|---|---|---|---|---|---|---|---|
| | | | | | | | Densité (g/cm$^3$) | Micro | Densité (g/cm$^3$) | Micro |
| H | 0 | 2 | 2 | 2 | 0 | 94 | 2.95 | 3 | 3.79 | 5 |
| I | 2 | 2 | 0 | 2 | 0 | 94 | 3.59 | 4 | 3.88 | 5 |
| J | 1 | 1 | 1 | 2 | 1 | 94 | 3.62 | 2 | 3.93 | 5 |
| K | 0 | 2 | 0 | 2 | 2 | 94 | 3.76 | 3 | 3.93 | 5 |
| L | 1 | 1 | 0 | 1 | 1 | 96 | 3.87 | 3 | 3.93 | 5 |
| M | 1 | 2 | 1 | 1 | 1 | 94 | 3.80 | 2 | 3.93 | 4 |
| N | 0 | 1 | 1 | 1 | 1 | 96 | 3.88 | 3 | 3.92 | 5 |
| O | 2 | 0 | 0 | 2 | 2 | 94 | 3.84 | 3 | 3.92 | 5 |
| P | 1 | 1 | 2 | 0 | 1 | 94 | 3.27 | 2 | 3.92 | 4 |
| Q | 1 | 1 | 1 | 1 | 0 | 96 | 2.29 | 3 | 3.63 | 4 |
| R | 1 | 1 | 1 | 0 | 1 | 96 | 3.34 | 2 | 3.92 | 4 |
| S | 2 | 2 | 2 | 0 | 0 | 94 | 2.11 | 1 | 3.23 | 4 |
| T | 1 | 0 | 1 | 1 | 1 | 96 | 3.47 | 1 | 3.90 | 4 |
| U | 2 | 0 | 2 | 2 | 0 | 94 | 2.51 | 1 | 3.27 | 4 |
| V | 0 | 0 | 2 | 2 | 2 | 94 | 3.67 | 3 | 3.94 | 4 |
| W | 1 | 0 | 2 | 1 | 1 | 95 | 3.69 | 1 | 3.68 | 3 |

C.4) Compromis densité - microstructure - solidité

Le tableau D ci-dessous illustre différentes compositions chimiques de bauxite synthétique pour lesquelles chaque oxyde (Fe$_2$O$_3$, SiO$_2$, TiO$_2$, CaO et MgO) varie entre 0 et 2% avec les données de densité, microstructure et solidité correspondant à deux frittages réalisés à 1400 et 1600°C.

Les deux graphiques des figures 3A et 3B illustrent pour chacune des 18 compositions chimiques l'évolution de la microstructure en fonction de la solidité (correspondant à deux frittages réalisés à 1400°C et 1600°C). Le cadre c représente la cible à viser à savoir une microstructure n'excédant pas 3 selon l'échelle arbitraire et une solidité >45.

**Tableau D**

| N° composition | % CaO | % TiO$_2$ | % MgO | % Fe$_2$O$_3$ | % SiO$_2$ | % Al$_2$O$_3$ | 1400°C | | | 1600°C | | |
|---|---|---|---|---|---|---|---|---|---|---|---|---|
| | | | | | | | Densité (g/cm$^3$) | Micro. | Solidité | Densité (g/cm$^3$) | Micro. | Solidité |
| F | 1 | 1 | 1 | 1 | 1 | 95 | 3.53 | 2 | 45 | 3.91 | 5 | 57 |
| G | 1 | 1 | 1 | 1 | 2 | 94 | 3.78 | 2 | 56 | 3.88 | 5 | 62 |
| H | 0 | 2 | 2 | 2 | 0 | 94 | 2.95 | 3 | 25 | 3.79 | 5 | 43 |
| I | 2 | 2 | 0 | 2 | 0 | 94 | 3.59 | 4 | 33 | 3.88 | 5 | 45 |
| J | 1 | 1 | 1 | 2 | 1 | 94 | 3.62 | 2 | 46 | 3.93 | 5 | 52 |
| K | 0 | 2 | 0 | 2 | 2 | 94 | 3.76 | 3 | 48 | 3.93 | 5 | 59 |
| L | 1 | 1 | 0 | 1 | 1 | 96 | 3.87 | 3 | 50 | 3.93 | 5 | 56 |
| M | 1 | 2 | 1 | 1 | 1 | 94 | 3.80 | 2 | 49 | 3.93 | 34 | 64 |
| N | 0 | 1 | 1 | 1 | 1 | 96 | 3.88 | 3 | 40 | 3.92 | 5 | 49 |
| O | 2 | 0 | 0 | 2 | 2 | 94 | 3.84 | 3 | 53 | 3.92 | 5 | 59 |
| P | 1 | 1 | 2 | 0 | 1 | 94 | 3.27 | 2 | 43 | 3.92 | 4 | 52 |
| Q | 1 | 1 | 1 | 1 | 0 | 96 | 2.29 | 3 | 30 | 3.63 | 4 | 49 |
| R | 1 | 1 | 1 | 0 | 1 | 96 | 3.34 | 2 | 44 | 3.92 | 4 | 55 |
| S | 2 | 2 | 2 | 0 | 0 | 94 | 2.11 | 1 | 38 | 3.23 | 4 | 46 |
| T | 1 | 0 | 1 | 1 | 1 | 96 | 3.47 | 1 | 43 | 3.90 | 4 | 60 |
| U | 2 | 0 | 2 | 2 | 0 | 94 | 2.51 | 1 | 35 | 3.27 | 4 | 43 |
| V | 0 | 0 | 2 | 2 | 2 | 94 | 3.67 | 3 | 45 | 3.94 | 4 | 51 |
| W | 1 | 0 | 2 | 1 | 1 | 95 | 3.69 | 1 | 45 | 3.78 | 3 | 65 |

1) Analyse des solidités à 1400°C.

Les compositions chimiques H, I, Q, S et U ne possédant pas de $SiO_2$ ne permettent pas d'avoir des solidités convenables (< 40). Comme vu précédemment, ces échantillons ont pour la plupart une densité très basse, ce qui ne leur permet pas d'avoir une tenue mécanique suffisante. Ceci implique que l'obtention d'un minimum de densité est le premier critère à satisfaire pour les grains abrasifs. L'analyse des densités, microstructures et solidités de ces échantillons confirme qu'il faut mettre $SiO_2$ pour obtenir un bon compromis. Cet oxyde est un des plus importants pour permettre de satisfaire l'objectif de densité, microstructure et solidité.

Les compositions chimiques G, K, O et V possédant le plus de $SiO_2$ (2%), présentent une solidité > 45. Lorsqu'ils possèdent également du CaO, comme les compositions G et O, la solidité est encore plus élevée > 50. Cet oxyde, lorsqu'il est couplé à $SiO_2$, augmente significativement la solidité. A l'inverse, on remarque que la composition N qui possède 1% de $SiO_2$, $TiO_2$, MgO, $Fe_2O_3$ mais pas de CaO possède la solidité la plus faible (si on ne considère pas les compositions sans $SiO_2$ qui ont des solidités < 40).

L'oxyde de fer a un impact limité sur la solidité mais positif. La comparaison des compositions chimiques R et F qui possèdent respectivement 0 et 1% de $Fe_2O_3$ entraine une augmentation de la solidité d'un seul point. L'augmentation est identique quand $Fe_2O_3$ passe de 1 à 2% (compositions chimiques F et J). L'analyse du couple densité - microstructure des différents exemples avait montré l'intérêt de mettre $Fe_2O_3$ et ceci se confirme avec la prise en compte des solidités. Les compositions possédant les solidités les plus élevées : compositions G, L et O possèdent 1 à 2% de $Fe_2O_3$.

MgO a tendance à diminuer la solidité. La comparaison des compositions L et F possédant respectivement 0 et 1% de MgO montre une diminution de la solidité de 5 points. Par contre, avec une autre association d'oxydes : 1% CaO, 0% $TiO_2$, 1% $Fe_2O_3$ et 1% $SiO_2$ (compositions chimiques T et W), l'augmentation de la concentration en MgO de 1 à 2% permet de gagner 2 points de solidité. Il semblerait donc que pour certaines compositions chimiques (compositions T et W par exemple), cet oxyde MgO n'a pas un effet négatif sur la solidité.

L'oxyde de titane permet d'augmenter la solidité. Ceci est lié au fait que la présence de cet oxyde favorise l'obtention de densité élevée pour une température donnée. Les compositions chimiques T, F et M pour lesquelles la concentration en $TiO_2$ passe respectivement de 0 à 1 puis 2% ont une solidité qui augmente de 2 points (0 à 1% $TiO_2$) et 4 points (1 à 2% $TiO_2$).

2) Analyse des solidités à 1600°C :

A cette température, à l'exception des compositions chimiques sans $SiO_2$, toutes les autres compositions chimiques permettent d'obtenir une solidité suffisante (> 45) et répondent à l'objectif. Ceci est vraisemblablement lié aux densités très élevées obtenues pour cette température de frittage. Les grains sont frittés à une température élevée ce qui leur confèrent une tenue mécanique importante.

Par contre, à l'exception de la composition W, les compositions possèdent également une microstructure trop grosse. L'absence de $TiO_2$ couplée à une quantité importante de MgO dans la composition chimique W (avec 1% de chacun des autres oxydes) semble être la meilleure composition lorsque le frittage s'effectue à plus haute température.

Les meilleures compositions chimiques (dans le cadre c) sont G, M, T et W. Elles possèdent 1% CaO, 1% $Fe_2O_3$, 0 à 2% $TiO_2$, 1 à 2% MgO, 1 à 2% $SiO_2$ et 94 à 96% de $Al_2O_3$.

**Revendications**

1. Particule abrasive frittée dont la composition chimique en oxydes suivants comprend les fourchettes de teneurs pondérales suivantes pour un total de 100%:

| % $Fe_2O_3$ | % $TiO_2$ | % CaO | % MgO | % $SiO_2$ | %$Al_2O_3$ |
|---|---|---|---|---|---|
| 0.5 - 2.5 % | 0 - 2 % | 0.5 - 2.5 % | 0.5 - 3% | 0.5 - 3 % | 93 - 96.5 % |

la densité de ladite particule étant d'au moins 3.5 g/cm3 et ladite particule présentant une microstructure dont la taille moyenne des microparticules cristallines est inférieure à 2 $\mu$m.

2. Particule abrasive frittée selon la revendication 1, **caractérisée en ce qu'**elle présente une microstructure dont la taille moyenne des microparticules cristallines est de 0.5 à 1.5 $\mu$m.

3. Particule abrasive frittée selon l'une des revendications 1 ou 2, **caractérisée en ce que** sa composition chimique

comprend les fourchettes de teneurs pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 0.5 - 1.5 % | 0.5 - 2 % | 0.5 - 1.5 % | 0.5 - 1.5 % | 1.5 - 2.5 % | 93.5 - 94.5 % |

**4.** Particule abrasive frittée selon la revendication 3, **caractérisée en ce que** sa composition chimique comprend les teneurs pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 1 % | 1 % | 1 % | 1 % | 2 % | 94 % |

**5.** Particule abrasive frittée selon l'une des revendications 1 ou 2, **caractérisée en ce que** sa composition chimique comprend les fourchettes de teneur pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 0.5 - 1.5 % | 0 - 0.1 % | 0.5 - 1.5 % | 1.5 - 2.5 % | 0.5 - 1.5 % | 94.5 - 95.5 % |

**6.** Particule abrasive frittée selon la revendication 5, **caractérisée en ce que** sa composition chimique comprend les teneurs pondérales suivantes pour un total de 100%:

| % $Fe_2O_3$ | % $TiO_2$ | % CaO | % MgO | % $SiO_2$ | % $Al_2O_3$ |
|---|---|---|---|---|---|
| 1 % | 0 % | 1 % | 2 % | 1 % | 95 % |

**7.** Particule abrasive frittée selon l'une des revendications 1 à 6, **caractérisée en ce qu'**elle présente une dimension de 20 $\mu$m à 10 mm, de préférence sous forme allongée de bâtonnet de 0.2 à 3 mm de diamètre et 0.5 à 10 mm de longueur.

**8.** Procédé de fabrication de particules abrasives selon l'une des revendications 1 à 7, **caractérisé en ce qu'**on réalise les étapes successives suivantes :

a) Mélange homogénéisé mécaniquement, typiquement par brassage de poudres comprenant:

a1) une poudre d'alumine, de préférence dont les particules ont un diamètre moyen (exprimé par le D50) entre 10 $\mu$m et 100 $\mu$m, ajoutée au mélange en proportion pondérale de 93 - 96,5%,
a2) une poudre d'oxyde de fer $Fe_2O_3$ ajoutée au mélange en proportion pondérale de 0.5% à 2.5% et, de préférence dont le D50 des particules est d'environ 20 $\mu$m,
a3) une poudre d'oxyde de calcium CaO ajoutée au mélange en proportion pondérale de 0.5% à 2.5% et, de préférence dont le D50 des particules est inférieur à 5 $\mu$m,
a4) une poudre d'oxyde de magnésium MgO ajoutée au mélange en proportion pondérale de 0.5% à 3% et, de préférence dont le D50 des particules est inférieur à 5 $\mu$m,
a5) une poudre d'oxyde de silicium $SiO_2$ ajoutée au mélange en proportion pondérale de 0.5% à 3% et de préférence dont le D50 des particules est inférieur à 2 $\mu$m, et
a6) une poudre d'oxyde de titane $TiO_2$, ajoutée au mélange en proportion pondérale de 0% à 2% et, de préférence dont le D50 des particules est inférieur à 5 $\mu$m.

b) Broyage du mélange de préférence pour obtenir des particules de D50 de 0.5 à 1.5 $\mu$m ;
c) Agglomération sous pression de la poudre ainsi obtenue, en vue d'obtenir des corps de pâte à cru ;
d) Séchage des corps de pâte à cru et découpe ou cassage pour obtenir des particules de tailles voulues ;
e) Frittage des dites particules par cuisson à une température de 1300°C à 1700°C, et

f) Tamisage des particules pour obtenir des particules de tailles voulues.

9. Procédé selon la revendication 8 dans lequel l'agglomération sous pression de l'étape c) est un compactage par filage à cru, résultant en la création de fibres qui sont ensuite cassées de telle sorte que l'on puisse obtenir des corps de pâte à cru sous forme de section donnée et de longueur donnée.

10. Procédé selon la revendication 8 ou 9 dans lequel à l'étape c) on réalise les étapes de :

c1) malaxage des poudres du mélange en présence de solvant contenant des additifs de rhéologie pour former une pâte, de préférence de l'eau contenant un ou plusieurs agents rhéologiques pour charges minérales, et
c2) extrusion sous forme d'un fil continu d'une pâte contenant de préférence de 70 à 90% en poids de poudres de mélange minéral.

11. Procédé selon l'une des revendications 8 à 10 dans lequel à l'étape d) on réalise concomitamment le séchage du fil et sa mise à longueur sous forme de bâtonnets.

12. Procédé selon l'une des revendications 8 à 11 dans lequel à l'étape e), la température de frittage est de 1300°C à 1500°C et on prépare des particules de composition chimique suivante à partir des fourchettes de teneurs pondérales suivantes de poudres des différents oxydes suivants pour un total de 100%:

| % $Fe_2O_3$ | % $TiO_2$ | % $CaO$ | % $MgO$ | % $SiO_2$ | % $Al_2O_3$ |
|---|---|---|---|---|---|
| 0.5 - 1.5 % | 0.5 - 2 % | 0.5 - 1.5 % | 0.5 - 1.5 % | 1.5 - 2.5 % | 93.5 - 94.5 % |

13. Procédé selon l'une quelconque des revendications 8 à 11 dans lequel à l'étape e), la température de frittage est entre 1500°C et 1700°C et on prépare des particules de composition suivante à partir des fourchettes de teneurs pondérales suivantes de poudres des différents oxydes suivants pour un total de 100%:

| % $Fe_2O_3$ | % $TiO_2$ | % $CaO$ | % $MgO$ | % $SiO_2$ | % $Al_2O_3$ |
|---|---|---|---|---|---|
| 0.5 - 1.5 % | 0 - 0.1 % | 0.5 - 1.5 % | 1.5 - 2.5 % | 0.5 - 1.5% | 94.5 - 95.5 % |

14. Produit abrasif, de préférence produit abrasif aggloméré de type meule **caractérisé en ce qu'**il comprend des particules abrasives selon l'une quelconque des revendications 1 à 7.

**Patentansprüche**

1. Gesintertes Schleifkorn, dessen chemische Zusammensetzung nach den folgenden Oxyden die folgenden Bandbreiten gewichteter Gehalte für eine Gesamtmenge von 100% enthält:

| % $Fe_2O_3$ | % $TiO_2$ | % $CaO$ | % $MgO$ | % $SiO_2$ | % $Al_2O_3$ |
|---|---|---|---|---|---|
| 0,5 - 2,5% | 0 - 2 % | 0,5 - 2,5 % | 0,5 - 3 % | 0,5 - 3 % | 93 - 96,5 % |

wobei die Dichte des Korns mindestens 3,5 g/cm3 ist und das Korn eine Mikrostruktur aufweist, wobei die durchschnittliche Größe der kristallinen Mikropartikel geringer als 2 $\mu$m ist.

2. Gesintertes Schleifkorn gemäß Anspruch 1, **dadurch gekennzeichnet, dass** es eine Mikrostruktur aufweist, wobei die durchschnittliche Größe der kristallinen Mikropartikel von 0,5 bis 1,5 $\mu$m ist.

3. Gesintertes Schleifkorn gemäß einem der Ansprüche 1 oder 2, **dadurch gekennzeichnet, dass** seine chemische Zusammensetzung die folgenden Bandbreiten gewichteter Gehalte für eine Gesamtmenge von 100% enthält:

| % Fe$_2$O$_3$ | % TiO$_2$ | % CaO | % MgO | % SiO$_2$ | % Al$_2$O$_3$ |
|---|---|---|---|---|---|
| 0,5 - 1,5 % | 0,5 - 2 % | 0,5 - 1,5 % | 0,5 - 1,5 % | 1,5 - 2,5 % | 93,5 - 94,5 % |

4. Gesintertes Schleifkorn gemäß Anspruch 3, **dadurch gekennzeichnet, dass** seine chemische Zusammensetzung die folgenden Bandbreiten gewichteter Gehalte für eine Gesamtmenge von 100% enthält:

| % Fe$_2$O$_3$ | % TiO$_2$ | % CaO | % MgO | % SiO$_2$ | % Al$_2$O$_3$ |
|---|---|---|---|---|---|
| 1 % | 1 % | 1 % | 1 % | 2 % | 94 % |

5. Gesintertes Schleifkorn gemäß einem der Ansprüche 1 oder 2, **dadurch gekennzeichnet, dass** seine chemische Zusammensetzung die folgenden Bandbreiten gewichteter Gehalte für eine Gesamtmenge von 100% enthält:

| % Fe$_2$O$_3$ | % TiO$_2$ | % CaO | % MgO | % SiO$_2$ | % Al$_2$O$_3$ |
|---|---|---|---|---|---|
| 0,5 - 1,5 % | 0 - 0,1 % | 0,5 - 1,5 % | 1,5 - 2,5 % | 0,5 - 1,5 % | 94,5 - 95,5 % |

6. Gesintertes Schleifkorn gemäß Anspruch 5, **dadurch gekennzeichnet, dass** seine chemische Zusammensetzung die folgenden Bandbreiten gewichteter Gehalte für eine Gesamtmenge von 100% enthält:

| % Fe$_2$O$_3$ | % TiO$_2$ | % CaO | % MgO | % SiO$_2$ | % Al$_2$O$_3$ |
|---|---|---|---|---|---|
| 1 % | 0 % | 1 % | 2 % | 1 % | 95% |

7. Gesintertes Schleifkorn gemäß einem der Ansprüche 1 bis 6, **dadurch gekennzeichnet, dass** es eine Dimension von 20 $\mu$m bis 10 mm aufweist, bevorzugt in länglicher Stäbchenform mit einem Durchmesser von 0,2 bis 3 mm und einer Länge von 0,5 bis 10 mm.

8. Herstellungsverfahren für gesinterte Schleifkörner aus einem der Ansprüche 1 bis 7, **dadurch gekennzeichnet, dass** die folgenden aufeinanderfolgenden Schritte durchgeführt werden:

a) mechanisches homogenisierendes Vermischen, standardmäßig durch Mischen von Pulvern, umfassend

a1) ein Aluminapulver, bevorzugt wobei die Körner einen durchschnittlichen Durchmesser (dargestellt durch den D50) zwischen 10 $\mu$m und 100 $\mu$m haben, zugesetzt zum Gemisch im gewichteten Verhältnis von 93 bis 96,5%,
a2) ein Eisenoxydpulver Fe$_2$O$_3$, zugesetzt zum Gemisch im gewichteten Verhältnis von 0,5 bis 2,5%, und dessen D50 der Körner bevorzugt etwa 20 $\mu$m ist,
a3) ein Calciumoxydpulver CaO, zugesetzt zum Gemisch im gewichteten Verhältnis von 0,5 bis 2,5%, und dessen D50 der Körner bevorzugt geringer als 5 $\mu$m ist,
a4) ein Magnesiumoxydpulver MgO, zugesetzt zum Gemisch im gewichteten Verhältnis von 0,5 bis 3%, und dessen D50 der Körner bevorzugt geringer als 5 $\mu$m ist,
a5) ein Siliciumoxydpulver SiO$_2$, zugesetzt zum Gemisch im gewichteten Verhältnis von 0,5 bis 3%, und dessen D50 der Körner bevorzugt geringer als 2 $\mu$m ist, und
a6) ein Titanoxydpulver TiO$_2$, zugesetzt zum Gemisch im gewichteten Verhältnis von 0 bis 2%, und dessen D50 der Körner bevorzugt geringer als 5 $\mu$m ist.

b) Vermahlen des Gemischs, vorzugsweise zum Erhalten von Körnern mit einem D50 von 0,5 bis 1,5 $\mu$m;
c) Agglomeration unter Druck des so erhaltenen Pulvers, um Rohpasten zu erhalten;
d) Trocknen der Rohpasten und Verschneiden oder Zerbrechen zum Erhalten von Körnern der gewünschten Größen;

e) Sintern der Körner durch Erhitzen auf eine Temperatur von 1300°C bis 1700°C, und

f) Sieben der Körner, um Körner mit den gewünschten Größen zu erhalten.

9. Verfahren gemäß Anspruch 8, in dem die Agglomeration unter Druck aus Schritt c) eine Kompaktierung durch Spinnen des Rohmaterials ist, so dass Fasern erzeugt werden, die danach so zerbrochen werden, dass Rohpasten in Form eines gegebenen Durchmessers und einer gegebenen Länge erhalten werden.

10. Verfahren gemäß Anspruch 8 oder 9, in dem in Schritt c) die folgenden Schritte ausgeführt werden

c1) Kneten der Pulver des Gemischs in Anwesenheit eines Lösungsmittels, enthaltend Rheologiezusätze zum Bilden einer Paste, bevorzugt von Wasser, enthaltend ein oder mehrere Rheologiemittel für mineralische Chargen, und

c2) Extrusion in Form eines durchgehenden Fadens aus einer Paste, enthaltend bevorzugt 70 bis 90 Gew.-% der Pulver des mineralischen Gemischs.

11. Verfahren gemäß einem der Ansprüche 8 bis 10, in dem in Schritt d) gleichzeitig das Trocknen des Fadens und seine Längensetzung in Form von Stäbchen erfolgt.

12. Verfahren gemäß einem der Ansprüche 8 bis 11, in dem in Schritt e) die Sintertemperatur von 1300°C bis 1500°C ist und Körner mit der folgenden chemischen Zusammensetzung mit den folgenden Bandbreiten gewichteter Gehalte der folgenden unterschiedlichen Oxyde für eine Gesamtmenge von 100% hergestellt werden:

| % $Fe_2O_3$ | % $TiO_2$ | % CaO | % MgO | % $SiO_2$ | % $Al_2O_3$ |
|---|---|---|---|---|---|
| 0,5 - 1,5 % | 0,5 - 2 % | 0,5 - 1,5 % | 0,5 - 1,5 % | 1,5 - 2,5 % | 93,5 - 94,5 % |

13. Verfahren gemäß einem der Ansprüche 8 bis 11, in dem in Schritt e) die Sintertemperatur von 1500°C bis 1700°C ist und Körner mit der folgenden chemischen Zusammensetzung mit den folgenden Bandbreiten gewichteter Gehalte der folgenden unterschiedlichen Oxyde für eine Gesamtmenge von 100% hergestellt werden:

| % $Fe_2O_3$ | % $TiO_2$ | % CaO | % MgO | % $SiO_2$ | % $Al_2O_3$ |
|---|---|---|---|---|---|
| 0,5 - 1,5 % | 0 - 0,1 % | 0,5 - 1,5 % | 1,5 - 2,5 % | 0,5 - 1,5 % | 94,5 - 95,5 % |

14. Schleifmittel, bevorzugt ein agglomeriertes Schleifmittel des Mühlsteintyps, **dadurch gekennzeichnet, dass** es Schleifkörner aus irgendeinem der Ansprüche 1 bis 7 enthält.

**Claims**

1. Sintered abrasive particle of which the chemical composition by the following oxides comprises the following weighted content ranges for a total of 100%:

| % $Fe_2O_3$ | % $TiO_2$ | % CaO | % MgO | % $SiO_2$ | % $Al_2O_3$ |
|---|---|---|---|---|---|
| 0.5 - 2.5% | 0 - 2 % | 0.5 - 2.5 % | 0.5 - 3 % | 0.5 - 3 % | 93 - 96.5 % |

wherein the density of said particle is at least 3.5 g/cm3 and said particle presents a microstructure of which the average size of the crystalline particles is below 2 $\mu$m.

2. Sintered abrasive particle according to claim 1, **characterised in that** it presents a microstructure of which the average size of the crystalline particles is from 0.5 to 1.5 $\mu$m.

3. Sintered abrasive particle according to one of claims 1 or 2, **characterised in that** its chemical composition comprises the following weighted content ranges for a total of 100%:

| % $Fe_2O_3$ | % $TiO_2$ | % CaO | % MgO | % $SiO_2$ | % $Al_2O_3$ |
|---|---|---|---|---|---|
| 0.5 - 1.5 % | 0.5 - 2 % | 0.5 - 1.5 % | 0.5 - 1.5 % | 1.5 - 2.5 % | 93.5 - 94.5 % |

**4.** Sintered abrasive particle according to claim 3, **characterised in that** its chemical composition comprises the following weighted content ranges for a total of 100%:

| % $Fe_2O_3$ | % $TiO_2$ | % CaO | % MgO | % $SiO_2$ | % $Al_2O_3$ |
|---|---|---|---|---|---|
| 1 % | 1 % | 1 % | 1 % | 2 % | 94 % |

**5.** Sintered abrasive particle according to one of claims 1 or 2, **characterised in that** its chemical composition comprises the following weighted content ranges for a total of 100%:

| % $Fe_2O_3$ | % $TiO_2$ | % CaO | % MgO | % $SiO_2$ | % $Al_2O_3$ |
|---|---|---|---|---|---|
| 0.5 - 1.5 % | 0 - 0.1 % | 0.5 - 1.5 % | 1.5 - 2.5 % | 0.5 - 1.5 % | 94.5 - 95.5 % |

**6.** Sintered abrasive particle according to claim 5, **characterised in that** its chemical composition comprises the following weighted content ranges for a total of 100%:

| % $Fe_2O_3$ | % $TiO_2$ | % CaO | % MgO | % $SiO_2$ | % $Al_2O_3$ |
|---|---|---|---|---|---|
| 1 % | 0 % | 1 % | 2 % | 1 % | 95 % |

**7.** Sintered abrasive particle according to one of claims 1 to 6, **characterised in that** it presents a dimension of 20 μm to 10 mm, preferably with an elongated rod shape of a diameter of 0.2 to 3 mm and a length of 0.5 to 10 mm.

**8.** Process for the preparation of the abrasive particles of one of claims 1 to 7, **characterised in that** the following successive steps are carried out:

a) mechanical homogenising mix, typically by mixing of powders comprising:

a1) an alumina powder, preferably of which the particles have an average diameter (expressed as the D50) between 10 μm and 100 μm, added to the mix in a weighted proportion of 93 to 96.5%,
a2) an iron oxide powder $Fe_2O_3$, added to the mix in a weighted proportion of 0.5% to 2.5% and, preferably of which the D50 of the particles is about 20 μm,
a3) a calcium oxide powder CaO, added to the mix in a weighted proportion of 0.5% to 2.5% and, preferably of which the D50 of the particles is less than 5 μm,
a4) a magnesium oxide powder MgO, added to the mix in a weighted proportion of 0.5% to 3% and, preferably of which the D50 of the particles is less than 5 μm,
a5) a silicon oxide powder $SiO_2$, added to the mix in a weighted proportion of 0.5% to 3% and, preferably of which the D50 of the particles is less than 2 μm,
a6) a titanium oxide powder $TiO_2$, added to the mix in a weighted proportion of 0% to 2% and preferably of which the D50 of the particles is less than 5 μm.

b) grinding of the mix, preferably in order to obtain particles with a D50 of 0.5 to 1.5 μm;
c) agglomeration under pressure of the obtained powder, in order to obtain raw paste bodies;
d) drying of the raw paste bodies and cutting or breaking in order to obtain particles of the desired sizes;
e) sintering of the said particles by heating at a temperature of 1300°C to 1700°C, and
f) sieving of the particles in order to obtain particles of the desired sizes.

9. Process according to claim 8, in which the agglomeration under pressure of step c) is a compacting by raw spinning, resulting in the formation of fibres which are then broken up in such a way as to obtain the raw paste bodies in the shape of a given diameter and a given length.

10. Process according to claim 8 or 9, in which in step c) the following steps are carried out:

> c1) kneading the powders of the mix in the presence of a solvent containing rheological additives to form a paste, preferably of water containing one or more rheological agents for mineral charges, and
> c2) extrusion in the shape of a continuous thread of paste containing preferably from 70 to 90 wt.-% powders of the mineral mix.

11. Process according to one of claims 8 to 10 in which in step d) drying of the thread and setting its length in rod shape are carried out simultaneously.

12. Process according to one of claims 8 to 11 in which in step e) the sintering temperature is from 1300°C to 1500°C and particles of the following chemical composition are formed from the following weighted content ranges of powders of the following different oxides for a total of 100%:

| % $Fe_2O_3$ | % $TiO_2$ | % CaO | % MgO | % $SiO_2$ | % $Al_2O_3$ |
|---|---|---|---|---|---|
| 0.5 - 1.5 % | 0.5 - 2 % | 0.5 - 1.5 % | 0.5 - 1.5 % | 1.5 - 2.5 % | 93.5 - 94.5 % |

13. Process according to one of claims 8 to 11 in which in step e) the sintering temperature is from 1500°C to 1700°C and particles of the following chemical composition are formed from the following weighted content ranges of powders of the following different oxides for a total of 100%:

| % $Fe_2O_3$ | % $TiO_2$ | % CaO | % MgO | % $SiO_2$ | % $Al_2O_3$ |
|---|---|---|---|---|---|
| 0.5 - 1.5 % | 0 - 0.1 % | 0.5 - 1.5 % | 1.5 - 2.5 % | 0.5 - 1.5 % | 94.5 - 95.5 % |

14. Abrasive product, preferably an agglomerated abrasive product of the grinding wheel type, **characterised in that** it comprises the abrasive particles according to any one of claims 1 to 7.

**FIG.1**

**FIG.1A**

**FIG.1C**

**FIG.1B**

**FIG.1D**

FIG.1E

FIG.2A

**FIG.2B**

**FIG.2C**

**FIG.3A**

**FIG.3B**

# EP 3 475 379 B1

## RÉFÉRENCES CITÉES DANS LA DESCRIPTION

**Documents brevets cités dans la description**

- US 2004259718 A1
- EP 1153899 A1
- US 9073177 B
- US 5611829 A
- US 5645619 A
- US 20130074418 A
- US 2004004990 A
- US 7169198 B
- US 8894730 B
- US 8882871 B
- US 8900337 B
- WO 0190030 A
- US 2004259718 A